# EUROPEAN PATENT APPLICATION

(11) **EP 1 416 461 A2**
(43) Date of publication of application: **06.05.2004**
(21) Application number: 04001244.5
(22) Date of filing: 08.05.2002
(51) Int. Cl.: G09F 27/00

(54) **Wireless multimedia display device**

(62) Divisional of application: 02010466.7
(71) Applicant: Precisa Instruments AG, 8953 Dietikon (CH)
(72) Inventor: Bühler, René, CH-8953 Dietikon (CH); Huber, Rudolf, CH-8953 Dietikon (CH)
(74) Representative: Rupp, Christian, Dipl.Phys.

(57) **Abstract**

The invention refers to a customized multimedia information channel system presenting advertisement information (124a) and, if desired, other multimedia streams on a mobile communication and computing device (100) equipped with a Liquid Crystal Display (102) designed to meet modern business-to-business (B2B) requirements. In this connection, interactive operation is guaranteed by a digital wireless data and control link (108) between said mobile computing device (100) and a product (122) to be advertised.

In contrast to conventional solutions, said mobile computing device (100) comprises a User Control Board (101) with an Application Programming Interface (105c) providing an intercommunication between a software routine (105b), said User Control Board (101), the display (102) of said device (100), and an additional hard-disk drive (111) for storing content data (124a) to be rendered on the display (102) of said device (100). Thereby, said User Control Board (101) is capable of communicating with a specific file server (118) over a bidirectional air interface (108) and a Wireless Local Area Network (120) by transmitting user requests (123) and receiving content information (124a), receiving control information (124b) from a remote control device (116), and transmitting status information (124c) to the remote control device (116). Furthermore, said device (100) is capable of receiving identification information (126) about the product (122) from a tag device (114) attached to said product (122).

## Description

### FIELD AND BACKGROUND OF THE INVENTION

The underlying invention generally relates to the field of mobile computing, wireless communication, and interactive multimedia applications in mobile communication networks with high-speed access.

### BRIEF DESCRIPTION OF THE PRESENT STATE OF THE ART

Personal Digital Assistants (PDAs) are becoming increasingly ubiquitous, and technology such as Bluetooth and the IEEE 802.11 standard will bring PDAs into close interactive communication with other types of devices. Furthermore, cellular phones and pagers, which are primarily used for communication, are increasingly becoming programmable. Today, it is investigated how these kinds of SHDs can be used with all kinds of home, office, and factory equipment. The concept is that people can use their own SHDs, e.g. to control a photocopier in an office, a machine tool in a factory, the lights or a video cassette recorder at home, and almost any other kind of electronic device.

### OBJECT OF THE UNDERLYING INVENTION

In view of the explanations mentioned above, it is the primary object of the underlying invention to enable users to create television-style multimedia presentations and to distribute them to television and/or computer screens in remote locations.

This object is achieved by means of the features of the independent claims. Advantageous features are defined in the dependent claims. Further objects and advantages of the invention are apparent in the following detailed description.

### SUMMARY OF THE INVENTION

The proposed solution according to the underlying invention is basically dedicated to a customized multimedia information channel system presenting advertisement information and, if desired, other multimedia streams on a mobile communication and computing device equipped with a Liquid Crystal Display (LCD) designed to meet modern business-to-business (B2B) requirements. In this connection, interactive operation is guaranteed by a bidirectional digital wireless data and control link realized as an IrDA interface between said device and an item to be advertised.

### BRIEF DESCRIPTION OF THE CLAIMS

In the following sections, the main aspects and embodiments of the underlying invention as disclosed in the appended claims shall briefly be summarized. A more detailed description of the invention and said claims will follow in a subsequent section dedicated to the description of the enclosed figures.

A first embodiment of the underlying invention is directed to a multimedia display device comprising a screen for displaying content information, a control means for controlling the screen display, means for enabling a user to input information, and a bidirectional air interface for wirelessly transmitting data from/to the control means. Thereby, said control means is adapted to receive both content information and remote control information over the air interface, the remote control information designating setting parameter for the display of content information on the screen, to locally store content information received over the air interface in a permanent storage device in the multimedia display device for later display on the screen, and to transmit both information representing the current status of the multimedia display device as well as user input information over the air interface.

Further aspects of said embodiment pertain to a similar multimedia display device comprising a screen for displaying content information, a control means for controlling the screen and the speaker means, a bidirectional air interface for wirelessly transmitting data from/to the control means, and a local storage means for the later display of content information received over the air interface. Said multimedia display device is additionally equipped with means for wirelessly detecting the presence of a tag device in the neighborhood of the multimedia display device, wherein the control means dynamically control the display of the content information depending on the detection of a tag device.

Furthermore, a second embodiment of the underlying invention refers to a display terminal for advertisement information which comprises a local storage device for advertisement information, a database associating identification codes of wireless smart cards with predefined advertisement information, a receiver for the presence of a wireless smart card in the neighborhood of the display terminal, and a controller for dynamically displaying locally stored advertisement information associated with the identification code of the wireless smart card detected.

The following claims are related to a method for the display of visual information on a display device comprising the steps of downloading content information to be displayed to a storage device of the display device over an air interface, wirelessly detecting the presence of a tag in the neighborhood of the display device, and dynamically controlling parameters for the display of content information according to the result of the detection step.

In the subsequent claims, a method for the display of advertisement information is disclosed, characterized by steps of attaching a wireless smart card bearing an identification code to an item with which advertisement information is to be associated, detecting the presence of the wireless smart card in the neighborhood of an information display terminal, the information display terminal comprising a local storage device for advertisement information to be displayed, and dynamically adapting the content displayed at the information display terminal with regard to advertisement information associated by the identification code of the wireless smart card detected.

Besides, one embodiment of the invention pertains to a software program product that implements a method as described above when running on the operating system of a computing device.

Another embodiment of the underlying invention is directed to a portable tag device attached to an item in a close environment of a multimedia display device and/or display terminal as described above. It comprises a wireless smart card bearing an identification information about said item, and an antenna for transmitting modulated RF signals over the air interface. Thereby, said tag device serves as a passive transponder for wirelessly transmitting modulated RF signals representing said identification information to the multimedia display device and/or display terminal over the air interface.

Next, a method for operating a tag device is disclosed which comprises the steps of loading identification information about said item from a local storage device on the wireless smart card, and continuously transmitting modulated RF signals representing said identification information to the multimedia display device and/or display terminal over the air interface when activated. Thereby, said RF signal can directly be transmitted from the tag device to the multimedia display device and/or display terminal over the air interface or by means of a Wireless Local Area Network (WLAN).

Finally, a wireless RF receiver mounted on the user control board of the multimedia display device and/or display terminal for detecting the presence of a tag device in the neighborhood of the wireless RF receiver is claimed.

### BRIEF DESCRIPTION OF THE DRAWINGS

Further advantages and possible applications of the underlying invention result from the subordinate claims as well as from the following description of the preferred embodiment of the invention which is depicted in the following drawings:
- Fig. 1a: exhibits a block diagram showing a system architecture for a multimedia display device according to the underlying invention and its interaction in a wireless environment capable of processing and displaying multimedia streams received over the air interface,
- Fig. 1b: shows the front and rear side of the multimedia display device and a fastening element used to attach said multimedia display device to a wall, and
- Fig. 2: presents a flowchart illustrating a method for displaying advertisement information about a specific item on a multimedia display device according to the underlying.

### DETAILED DESCRIPTION OF THE UNDERLYING INVENTION

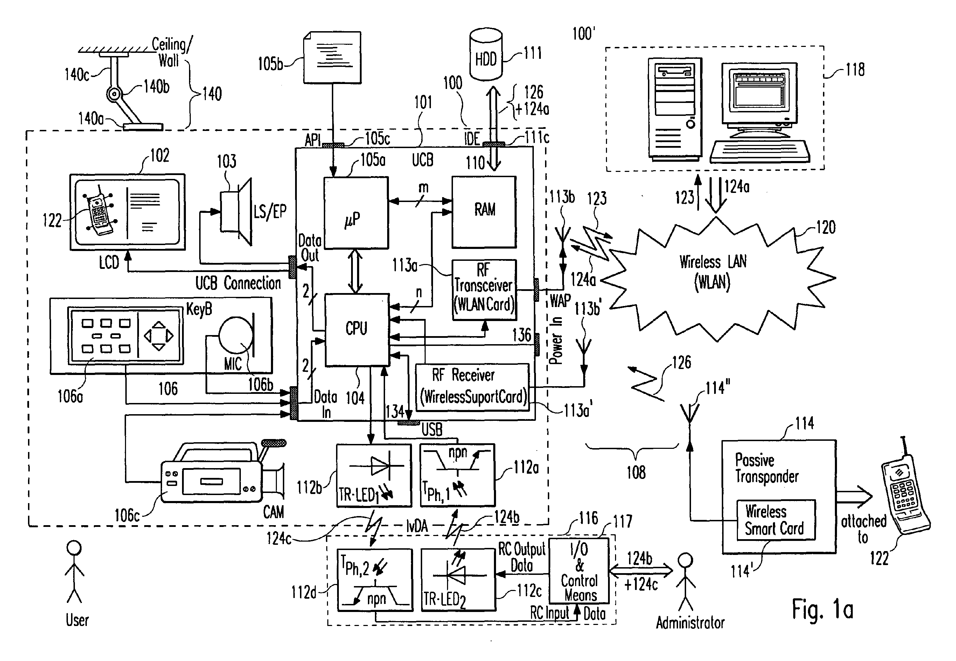

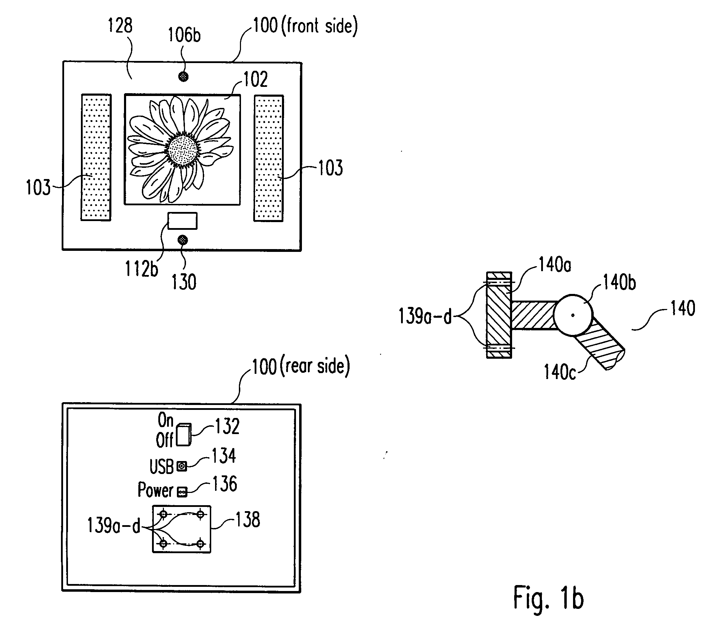

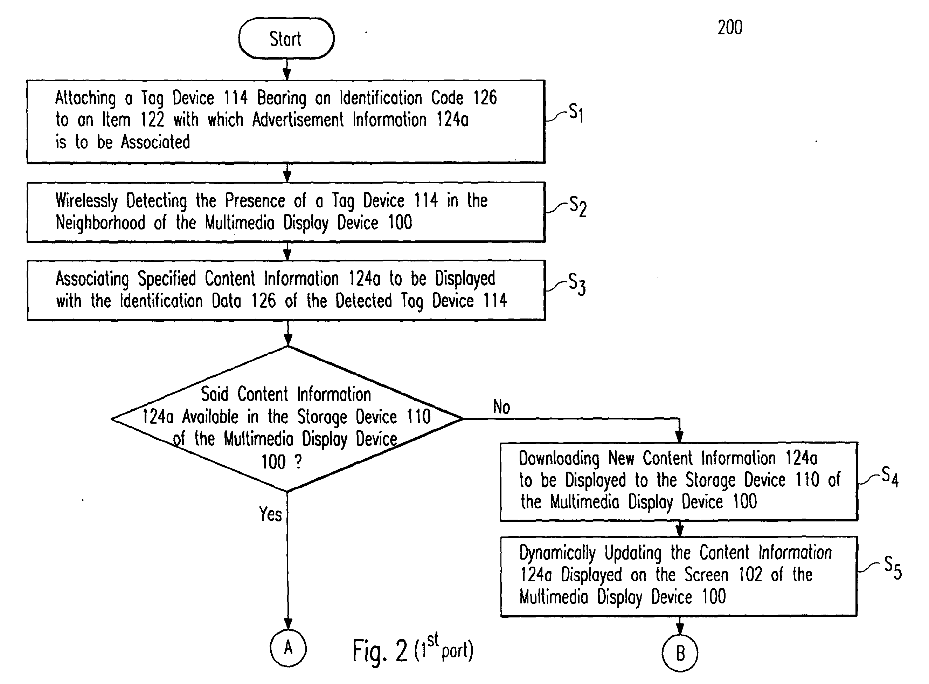

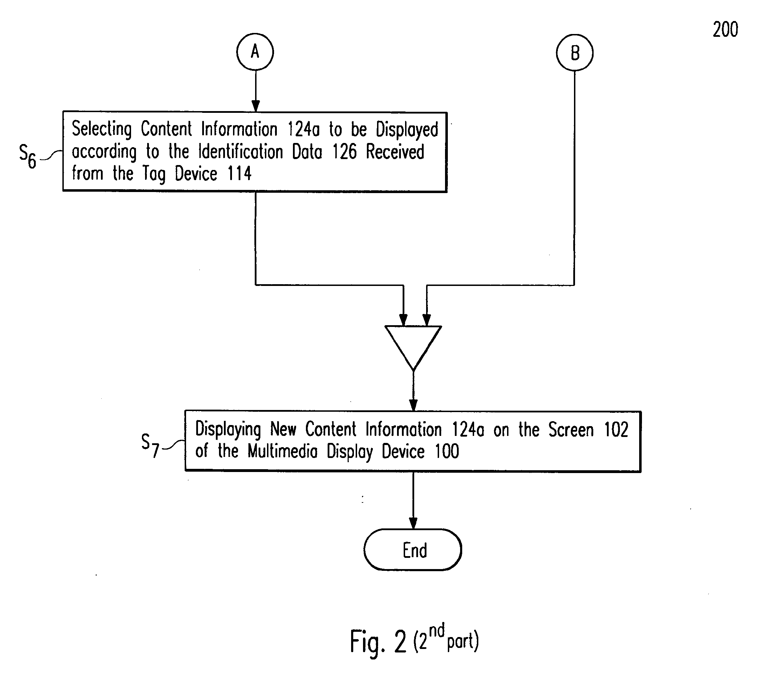

In the following, the preferred embodiment of the underlying invention as depicted in Figs. 1a, 1b, and 2 shall be explained in detail. The meaning of the symbols designated with reference signs as depicted in said figures can be taken from the appended table of reference signs.

In Fig. 1a, a block diagram is depicted showing a system architecture for a multimedia display device 100 according to the underlying invention and its interaction in a wireless environment capable of processing and displaying multimedia streams received over the air interface 108, which is used for presenting advertisement information 124a about a specific item 122 by wirelessly detecting the presence of a tag device 114 attached to said item 122, thereby dynamically controlling the display of said content information 124a depending on the identification data 126 of a detected tag device 114.

In a first embodiment of the underlying invention, the multimedia display terminal 100 is fixed and the item 122 with the attached tag device 114 is carried to said multimedia display terminal 100. In a second embodiment, however, the multimedia display terminal 100 is a mobile terminal to be carried to the fixed item 122 with the attached tag device 114.

In contrast to conventional solution, said multimedia display device 100 comprises a User Control Board 101 (UCB) with an Application Programming Interface 105c (API) providing an intercommunication between a software routine 105b, said User Control Board 101 (UCB), the Liquid Crystal Display 102 (LCD) of said device 100, and an additional hard-disk drive 111 (HDD) for storing content data 124a to be rendered on the display 102 of said device 100. Thereby, said UCB 101 is capable of transmitting user requests 123 to a specific file server 118 over an air interface 108 and a Wireless Local Area Network 120 (WLAN), and receiving content information 124a (e.g. advertising information about a specific item 122) from said file server 118. Furthermore, it is capable of receiving control information 124b (e.g. control parameters for adjusting the audio volume and the screen brightness of the multimedia display device 100, respectively) from a remote control device 116, transmitting status information 124c representing specific setting parameters of the multimedia display device 100 (e.g. a signal indicating "stand-by" or "on" mode of said multimedia display device 100) to said remote control device 116, and receiving identification codes 126 specifying said item 122 from said tag device 114.

The central processing unit 104 (CPU) of the multimedia display device 100, which is mounted on the UCB 101, serves to control the hardware elements of said display device 100 - the touch-sensitive flat-panel screen 102, loudspeakers or earphones 103 for rendering acoustic content information 124a, the information input means 106 (e.g. a keyboard 106a, a microphone 106b and/or a Web camera 106c), a permanent (non-volatile) storage device 110 for the later display of user data 124a (content information) received over the air interface 108, and a mobile transceiver (WLAN card) capable of transmitting and/or receiving modulated RF signals representing user requests 123 to be transferred from the multimedia display device 100 to the file server 118, and content information 124a (user data) to be transferred from the file server 118 to the multimedia display device 100.

The coprocessor 105a (µP) of the UCB 101 is a small microprocessor which is needed for controlling the bidirectional air interface 108 and the multimedia display device 100 according to setting parameters designated by received remote control information 124b. The control software 105b running on said coprocessor 105a, which is fed to the UCB 101 over a specific Application Programming Interface 105c (API), is responsible for sending and receiving data encoded by infrared light impulses, and controlling the setting parameters of said multimedia display device 100 (e.g. volume, brightness, etc.).

Moreover, the system provides a way of connecting auxiliary devices (e.g. barcode scanner, printer, etc.) with the aid of two or more Universal Serial Bus (USB) ports 134. Any data received from these auxiliary devices is sent to a control software 105b. Any data to be sent to these auxiliary devices is provided by said control software 105b.

According to the underlying invention, the retransmission of status information 124c from the UCB 101 to the file server 118 can e.g. be accomplished by a multimedia display device 100 with a touch-sensitive screen 102 which allows a user to comfortably input and dispatch content data 124a and control commands 124b. Aside from a keyboard 106a serving as an input means for text data, the multimedia display device 100 can be equipped with further input means 106, e.g. a microphone 106b or a Web camera 106c serving as input means for audio and video data, respectively.

Content data 124a that can be rendered by the multimedia display device 100 can dynamically be modified. Thereby, said content data 124a depends on detecting the presence of any passive transponder supplied with a wireless smart card 114' in a close environment of the multimedia display device 100, which serves as a tag device 114. For this purpose, said multimedia display device 100 is equipped with an additional tag antenna 113b' connected to an RF receiver 113a' capable of detecting which tag device 114 is in a close environment of said multimedia display device 100 or whether there is any tag device 114 at all. For example, such tag devices 114 can be attached to products 122 sold in a supermarket or in a department store. Thus, content information 124a displayed on the touch-sensitive screen 102 of the multimedia display device 100 refers to the respective product 122 in a close environment of the multimedia display device 100.

The user can give input to the multimedia display device 100 in three ways: by touching the screen 102 in case a touch sensitive display is applied, by means of speech input over an integrated microphone 106b, by means of a contactless smart card 114' which can be detected when hold close enough to the multimedia display device 100, or by sending input information over an Infrared Data Association (IrDA) interface. Likewise, different forms of user output are conceivable: by means of a Thin Film Transistor (TFT) screen 102 serving as an output means for video data, by means of two 2 W loudspeakers serving as output means for audio data, by means of a light-emitting diode 130 (LED) which is on when the system is connected to power and switched on, or again via IrDA.

Thereby, the system administrator is able to control audio volume, screen brightness and the system status ("stand-by mode" or "on") with the aid of a Personal Digital Assistant (PDA) over the air interface 108 via IrDA by using a dedicated program.

Fig. 1b presents the front and rear side of the multimedia display device 100 and a fastening element 140 used to attach said multimedia display device 100 to a wall. In one embodiment of the underlying invention, the encasing 128 of the proposed multimedia display device 100 accommodates
- a touch-sensitive flat-panel screen 102 realized as a Liquid Crystal Display (LCD),
- a microphone 106b (MIC) serving as an input means for audio data,
- two loudspeakers 103,
- one infrared-light-emitting diode 112b (IR-LED₁) used for wirelessly transmitting status information 124c about the multimedia display device 100 to a remote control device in the neighborhood of said device 100 for controlling the settings of the multimedia display device 100, and finally
- one light-emitting diode 130 (LED) indicating "stand-by" or "on" mode of said multimedia display device 100,
which are placed at the customer-specific front side of the multimedia display device 100. Thereby, said multimedia display device 100 receives 12 V DC voltage either through a standard power connector 136 at the rear side or from a battery pack. An on-off switch 132, a Universal Serial Bus (USB) interface 134, a plug-in power supply jack 136, and a socket area 138 used for attaching said multimedia display device 100 to a wall with the aid of a fastening element 140 are placed at the rear side of said multimedia display device 100. Thereby, said socket area 138 is provided with four bore holes 139a-d used for attaching the attachment area 140a (flange) of said fastening element 140 to the socket area 138 at the rear side of the multimedia display device 100 by means of a bolted joint.

The fastening element 140 is applied to attach said multimedia display device 100 to a wall or to the ceiling of a room. It comprises an attachment area 140a (flange), which is connected to the socket area 138 at the rear side of said multimedia display device 100, a customer-specific pivoting hinge 140b used for adjusting the position of said multimedia display device 100 when mounted to a wall or the ceiling of a room, and a hinge pin 140c serving as an attachment means for mounting said multimedia display device 100 to a wall or to the ceiling of a room. A user is able to fix the hinge 140b at any angle. The form of said hinge 140b depends on the structure where it is to be attached.

Liquid Crystal Displays (LCDs) realized in Thin Film Transistor (TFT) technology which are applied to SHDs usually have a relatively small viewing angle in order to save power. For SHDs, this is usually not a severe impairment. However, for use as an information display terminal 100 in supermarkets, shops and department stores where said display terminal 100 is placed in a fixed position (e.g. attached to a shelf), defining a large viewing angle might be a problem. Therefore, another TFT screen 102 is needed, which possibly leads to a redesign of the mechanical components 140a-c around said TFT screen 102.

In Fig. 2, a flowchart 200 illustrating a method for displaying advertisement information 124a about a specific item 122 on a multimedia display device 100 according to the underlying invention by wirelessly detecting the presence of a tag device 114 attached to said item 122, thereby dynamically controlling the display of the content information 124a depending on the detection of a tag device 114. Said method is executed by means of a computer software program product running on said multimedia display device 100.

In a first step (S₁), a tag device 114 (realized as wireless smart card) bearing an identification code 126 is attached to an item 122 with which advertisement information 124a is to be associated. After having detected the presence of a tag device 114 in the neighborhood of the multimedia display device 100 in a second step (S₂), specified content information 124a to be displayed is associated with the identification data 126 of the detected tag device 114 in a third step (S₃).

In case content information 124a associated with a detected tag device 114 is not available in the Read Access Memory 110 (RAM) of the multimedia display device 100, new content information 124a to be displayed is downloaded to said storage device 110 over an air interface 108 in a fourth step (S₄). Then, in a fifth step (S₅), content information 124a stored in said Read Access Memory 110 (RAM) is dynamically updated. Otherwise, available content information 124a associated with a detected tag device 114 which shall be displayed on the flat-panel screen 102 of the multimedia display device 100 is selected in a sixth step (S₆).

Finally, the updated content information 124a is displayed on said screen 102 in the last step (S₇).

The main advantage of the proposed solution according to the underlying invention is that it allows vendors to create customized interactive multimedia presentations in television style and to distribute them to a fixed information display terminal and/or to the screen of a customer's mobile computing device 100. Thereby, it enables vendors with minimal technical training to advertise products and to better communicate with software tools that combine networking and video technologies, which means to produce and distribute multimedia communication programs in order to target an audience at specific locations and/or times. In this connection, the inventive solution addresses the complete range of creation, scheduling, distributing and playback of multimedia data. Since the proposed approach works with existing and future network infrastructures, the value of existing hardware and software investments can be preserved, thereby maximizing the use of existing digital media. The invention provides support for specific hardware peripherals and is positioned to coincide with advertisements in networked multimedia and streaming video. Offering the first bidirectional communication from the multimedia display device 100 back to the central broadcaster (e.g. a file server 118 of a specific content provider or a satellite broadcaster), the invention represents a possible convergence of traditional computer network technology and television. Major markets where said invention can advantageously be deployed include cable television, corporate communications, retail point of sale, public and institutional information, interactive presentation as well as interactive television.

## Claims

1. Multimedia display device, comprising
- a screen (102) for displaying (S₇) content information (124a),
- a control means (104) for controlling (S₅) the screen (102),
- means (106) for enabling a user to input information, and
- a bidirectional air interface (108) for wirelessly transmitting data from/to the control means (104),
**characterized in that**
the control means (104) is adapted
- to receive both content information (124a) and remote control information (124b) over the air interface (108), the remote control information (124b) designating setting parameter for the display (S₇) of content information (124a) on the screen (102),
- to locally store content information (124a) in a permanent storage device (110) in the multimedia display device (100) for later display (S₇) on the screen (102), and
- to transmit both information (124c) representing the current status of the multimedia display device (100) over the air interface (108).

2. Multimedia display device according to anyone of the preceding claims,
**characterized by**
- a main processor (104) for controlling (S₅) hardware elements (102, 103, 106, 110, 113a, 113a') of the multimedia display device (100), and
- a coprocessor (105a) for controlling the bidirectional air interface (108) and the multimedia display device (100) depending on setting parameters designated by remote control information (124b) received.

3. Multimedia display device according to anyone of the preceding claims,
**characterized in that**
the bidirectional air interface (108) is an IR interface.

4. Display terminal for advertisement information (124a),
**characterized by**
- a local storage device (110) for said advertisement information (124a),
- a database (111) associating (S₃) identification data (126) of wireless smart cards (114') with predefined advertisement information (124a),
- an RF receiver (113a') for detecting (S₂) the presence of a wireless smart card (114') in the neighborhood of the display terminal (100), and
- a controller (104) for dynamically displaying (S₇) the locally stored advertisement information (124a) associated with the identification data (126) of the wireless smart card (114') detected.

5. Method for the display of advertisement information (124a) ,
**characterized by** the following steps:
- attaching (S₁) a wireless smart card (114') bearing an identification data (126) to an item (122) with which advertisement information (124a) is to be associated,
- detecting (S₂) the presence of the wireless smart card (114') in the neighborhood of an information display terminal (100), the information display terminal (100) comprising a local storage (110) device for advertisement information (124a) to be displayed, and
- dynamically adapting (S₅) the content information (124a) displayed at the information display terminal (100) to new advertisement information (124a) associated by the identification data (126) of the wireless smart card (114') detected.

6. Method according to claim 5,
**characterized in that**
the display terminal (100) is fixed and the item (122) with the attached smart card (114') is carried to the display terminal (100).

7. Method according to claim 5,
**characterized in that**
the display terminal (100) is a mobile terminal to be carried to the fixed item (122) with the attached smart card (114').

8. Computer software program product,
**characterized in that**
it implements a method according to anyone of claims 5 to 7 when running on a computing device (100).

9. Portable tag device attached to an item (122) in a close environment of a handheld multimedia display device (100), which serves as a passive transponder (114) for wirelessly transmitting modulated RF signals representing said identification information (126) to the multimedia display device and/or display terminal (100) over the air interface (108).
